# EUROPÄISCHE PATENTSCHRIFT

(11) **EP 0 939 536 B1**
(45) Veröffentlichungstag und Bekanntmachung des Hinweises auf die Patenterteilung: **08.06.2005**
(21) Anmeldenummer: 99102159.3
(22) Anmeldetag: 03.02.1999
(51) Int. Cl.: H04M 3/42, H04Q 3/62, H04Q 7/22

(54) **Verfahren und Anordnung zum Bereitstellen von Leistungsmerkmalen für mobile Teilnehmer über ein Kommunikationsnetz**
Method and device for providing service features for mobile subscribers over a communication network
Méthode et appareil pour délivrer des services pour des abonnés mobiles par un réseau de communication

(30) Priorität: 27.02.1998 DE 19808369
(43) Veröffentlichungstag der Anmeldung: 01.09.1999
(73) Patentinhaber: SIEMENS AKTIENGESELLSCHAFT, 80333 München (DE)
(72) Erfinder: Hünlich, Klaus, 85467 Neuching (DE); Wehrend, Klaus, 82223 Eichenau (DE)

(56) Entgegenhaltungen:
- EP-A- 0 520 483
- WO-A-96/31044
- WO-A-97/38518
- GB-A- 2 287 610
- US-A- 3 867 582

## Beschreibung

Aufgrund einer zunehmenden zeitlichen und räumlichen Flexibilisierung der Arbeitsbedingungen nimmt die Anzahl derjenigen Mitarbeiter, die ihre beruflichen Aufgaben nicht an ihrem Arbeitsplatz im Unternehmen erledigen, ständig zu. Aus "Das virtuelle Büro" telcomreport, Heft 4, 1997, Siemens AG Berlin und München, ist bekannt, daß für ein effektives Erledigen der Aufgaben außerhalb des Unternehmens ein Zugriff auf die im lokalen Kommunikationsnetz des Unternehmens angebotenen Kommunikations-Leistungsmerkmale unabhängig vom Aufenthaltsort des Mitarbeiters notwendig ist. Zu diesen Leistungsmerkmalen zählen die zusätzlich zu den standardmäßig in einem z.B. ISDN orientierten Kommunikationsnetz bereitgestellten Leistungsmerkmale, wie beispielsweise Einrichten einer Konferenzschaltung oder Signalisieren eines Nachrichteneingangs.

Um an einem externen Endgerät die von einem Kommunikationssystem realisierten Leistungsmerkmale in gleicher Weise wie an einem internen Endgerät zur Verfügung stellen zu können, wurde bereits vorgeschlagen, endgeräteorientierte Signalisierungsinformationen, wie sie üblicherweise im Rahmen eines Signalisierungsprotokolls zwischen dem Kommunikationssystem und an diesem angeschlossenen internen Endgeräten übermittelt werden, zwischen dem Kommunikationssystem und dem externen Endgerät über eine, zusätzlich zur Nutzdatenverbindung eingerichtete Datenverbindung zu übermitteln.

Dies bedingt, daß am externen Endgerät zwei Nutzdatenverbindungen zur Verfügung stehen, um über eine erste Nutzdatenverbindung (z.B. ein erster ISDN-orientierter B-Kanal) die Nutzdaten und über eine zweite Nutzdatenverbindung (z.B. ein zweiter ISDN-orientierter B-Kanal) die endgeräteorientierten Signalisierungsinformationen zu übermitteln. Des weiteren wird vorausgesetzt, daß das externe Endgerät derart ausgebildet ist, daß die übermittelten endgeräteorientierten Signalisierungsinformationen ausgewertet werden können.

GB-A-2 287 610, 20 September 1995, offenbart eine andere Lösung, um die von einem Kommunikationssystem realisierten Leistungsmerkmale an einem externen Endgerät zur Verfügung zu stellen.

Der vorliegenden Erfindung liegt die Aufgabe zugrunde Maßnahmen anzugeben, durch welche von einem Kommunikationssystem realisierte Leistungsmerkmale an einem externen Endgerät bereitgestellt werden können, wobei Anforderungen an das externe Endgerät minimal sind.

Die Lösung dieser Aufgabe erfolgt erfindungsgemäß mit den Merkmalen des Patentanspruchs 1 bzw. 11.

Um an einem externen Endgerät die von einem Kommunikationssystem realisierten Leistungsmerkmale zur Verfügung stellen zu können, werden Steuerinformationen in Form von DTMF-Signalen (Dual Tone Multi Frequency) über eine Sprachverbindung vom externen Endgerät zu einer im Kommunikationssystem angeordneten Teleworking-Teilnehmeranschlußbaugruppe übermittelt. Für die DTMF-Signale wird jeder Taste eines Endgeräts ein charakteristisches Signal zugeordnet, das bei Tastenbetätigung über die Sprachverbindung übermittelt wird. Das Signal unterscheidet sich in Frequenz und Signaldauer von den üblicherweise über die Sprachverbindung übermittelten Daten, so daß die Signale auf der Teleworking-Teilnehmeranschlußbaugruppe identifiziert und ausgewertet werden können.

Ein wesentlicher Vorteil der Erfindung besteht darin, daß das externe Endgerät über ein beliebiges Kommunikationsnetz, z.B. ein analoges Kommunikationsnetz, ein ISDN-orientiertes Kommunikationsnetz oder ein Funknetz mit dem Kommunikationssystem verbunden sein kann. Die Anforderungen an das externe Endgerät bestehen lediglich darin, daß durch das externe Endgerät das MFV-Wahlverfahren (Mehrfrequenz-Wahlverfahren) zur Erzeugung von DTMF-Signalen unterstützt wird.

Ein weiterer Vorteil der Erfindung besteht darin, daß die für das durch die Erfindung realisierbare sogenannte Teleworking-Konzept notwendigen Systemkomponenten in einem bestehenden Kommunikationssystem auf einfache Weise integrierbar sind.

Vorteilhafte Weiterbildungen der Erfindung sind in den Unteransprüchen angegeben.

Ein Vorteil von Ausgestaltungen der Erfindung besteht darin, daß ein Teilnehmer, der sich an einem externen Endgerät am Kommunikationssystem angemeldet hat, unter der gleichen Rufnummer zu erreichen ist, wie an einem ihm zugeordneten internen Endgerät.

Durch eine Zuweisung von fiktiven Anschlußports - in der Literatur vielfach als Pseudo-Anschlußports bezeichnet - können Teilnehmer die Leistungsmerkmale des Kommunikationssystems an einem externen Endgerät auch dann nutzen, wenn ihnen kein physikalisch vorhandenes internes Endgerät zugeordnet ist.

Ein Ausführungsbeispiel der Erfindung wird im folgenden anhand der Zeichnung näher erläutert.

Dabei zeigen
- Fig. 1:: ein Strukturbild zur schematischen Darstellung der am Teleworking-Konzept beteiligten wesentlichen Funktionseinheiten;
- Fig. 2:: ein Strukturbild zur schematischen Darstellung der wesentlichen Funktionseinheiten einer Teleworking-Teilnehmeranschlußbaugruppe eines Kommunikationssystems.

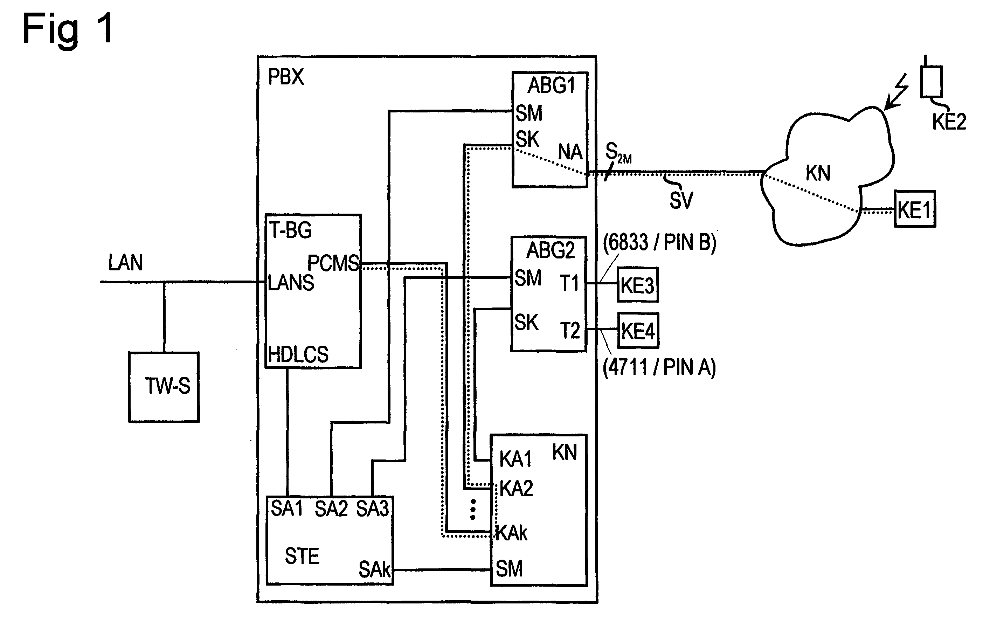

Fig. 1 zeigt eine schematische Darstellung eines Kommunikationssystems PBX mit einer in diesem angeordneten, als Teilnehmeranschlußeinheit ausgestalteten Teleworking-Teilnehmeranschlußbaugruppe - im weiteren mit Teleworking-Baugruppe T-BG bezeichnet. Das Kommunikationssystem PBX weist weitere Teilnehmer- bzw. Netzanschlußeinheiten zum Anschluß von Kommunikationsendgeräten auf. Beispielhaft sind eine erste und eine zweite Anschlußeinheit ABG1, ABG2 dargestellt. Des weiteren beinhaltet das Kommunikationssystem PBX ein mehrere bidirektionale, Zeitmultiplex-orientierte Koppel-Anschlüsse KA1,..., KAk aufweisendes Koppelfeldmodul KN, wobei die Koppel-Anschlüsse KA1,...,KAk als PCM-Anschlüsse (Puls Code Modulation) - auch als PCM-Highways, Speech-Highways oder S_{2M}-Anschlüsse bezeichnet - ausgestaltet sind. Jeder PCM-Highway umfaßt zum einen 30 Nutzkanäle, welche als ISDN-orientierte B-Kanäle (Integrated Services Digital Network) mit einer Übertragungsrate von 64 kBit/s ausgestaltet sind und zum anderen einen Signalisierungskanal, welcher als ISDN-orientierter D-Kanal mit einer Übertragungsrate von 64 kBit/s ausgestaltet ist. Über einen Koppel-Anschluß KAk ist das Koppelfeldmodul KN mit einer bidirektionalen, Zeitmultiplex-orientierten PCM-Schnittstelle PCMS der Teleworking-Baugruppe T-BG verbunden. Über die weiteren Koppel-Anschlüsse KA1, KA2 ist das Koppelfeldmodul KN jeweils mit einem bidirektionalen, Zeitmultiplex-orientierten Anschluß SK der ersten und der zweiten Anschlußeinheit ABG1, ABG2 verbunden.

Des weiteren ist im Kommunikationssystem PBX eine mehrere Steueranschlüsse SA1,...,SAk aufweisende Steuereinheit STE angeordnet. Über einen Steueranschluß SAk ist die Steuereinheit STE mit einem Steuereingang SM des Koppelfeldmoduls KN verbunden. Über die weiteren Steueranschlüsse SA1,...,SA3 ist die Steuereinheit STE zum einen mit einer auf der Teleworking-Baugruppe T-BG angeordneten HDLC-Schnittstelle HDLCS und zum anderen mit Steueranschlüssen SM der ersten und der zweiten Anschlußeinheit ABG1, ABG2 verbunden.

An einem Netzanschluß NA - beispielsweise ein bidirektionaler, Zeitmultiplex-orientierter S_{2M}-Anschluß - der ersten Anschlußeinheit ABG1 ist ein Kommunikationsnetz KN angeschlossen. Das Kommunikationsnetz KN kann beispielsweise ein ISDN-orientiertes Kommunikationsnetz, ein analoges Kommunikationsnetz oder ein Funk-Kommunikationsnetz sein. An das Kommunikationsnetz KN sind ein erstes externes Endgerät KE1 und ein zweites externes Endgerät KE2 (z.B. ein mobiles Endgerät) angeschlossen. An einem ersten Teilnehmeranschluß T1 - beispielsweise einem S₀-Anschluß (2B + D, d.h. 2 ISDN-orientierte Nutzdatenkanäle und ein ISDN-orientierter Signalisierungskanal) - der zweiten Anschlußeinheit ABG2 ist ein erstes internes Endgerät KE3 mit einer kommunikationssysteminternen Rufnummer 6833 und an einem zweiten Teilnehmeranschluß T2 der zweiten Anschlußeinheit ABG2 ist ein zweites internes Endgerät KE4 mit einer kommunikationssysteminternen Rufnummer 4711 angeschlossen.

Über eine LAN-Schnittstelle LANS der Teleworking-Baugruppe T-BG ist ein lokales Rechnernetz LAN an das Kommunikationssystem PBX angeschlossen. Im lokalen Rechnernetz LAN ist ein Rechner, z.B. ein Personal Computer - im weiteren mit Teleworking-Rechner TW-S bezeichnet - angeordnet, der zur Steuerung der Teleworking-Baugruppe T-BG dient.

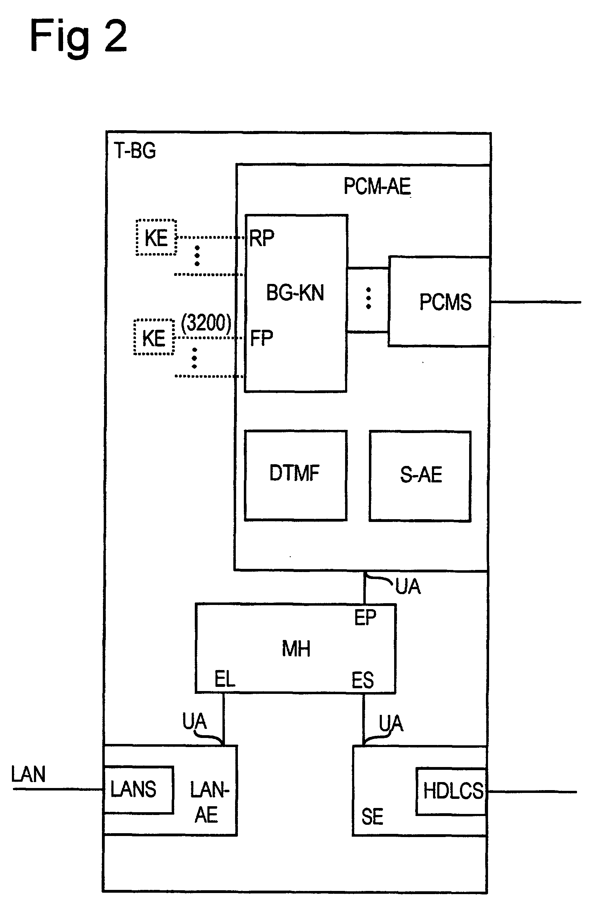

Fig. 2 zeigt eine schematische Darstellung der wesentlichen Funktionseinheiten der Teleworking-Baugruppe T-BG. Die Teleworking-Baugruppe T-BG weist eine LAN-Anschlußeinheit LAN-AE mit einer LAN-Schnittstelle LANS auf, wobei die LAN-Schnittstelle LANS mit dem lokalen Rechnernetz LAN verbindbar ist. Die Teleworking-Baugruppe T-BG weist weiter eine PCM-Anschlußeinheit PCM-AE mit einer bidirektionalen, Zeitmultiplex-orientierten PCM-Schnittstelle PCMS auf, wobei die PCM-Schnittstelle PCMS mit dem Koppel-Anschluß KAk des Koppelfeldmoduls KN des Kommunikationssystems PBX verbindbar ist. Des weiteren weist die PCM-Anschlußeinheit PCM-AE ein - mit der PCM-Schnittstelle PCMS verbundenes - Baugruppenkoppelfeldmodul BG-KN auf. In der PCM-Anschlußeinheit PCM-AE sind weiter eine DTMF-Erkennungseinheit DTMF und eine Ausgabeeinheit S-AE angeordnet.

Des weiteren ist auf der Teleworking-Baugruppe T-BG eine Signalisierungseinheit SE, mit einer HDLC-Schnittstelle HDLCS angeordnet. Über die HDLC-Schnittstelle HDLCS ist die Signalisierungseinheit SE mit dem Steueranschluß SA1 der Steuereinheit STE des Kommunikationssystems PBX verbindbar. Die LAN-Anschlußeinheit LAN-AE, die PCM-Anschlußeinheit PCM-AE und die Signalisierungseinheit SE sind jeweils über einen Anschluß UA mit einem Anschluß EL, EP, ES einer auf der Teleworking-Baugruppe T-BG angeordneten Umwandlungseinheit MH verbunden.

In der Umwandlungseinheit MH wird anhand von Adressinformationen - d.h. Ziel- und Ursprungsdaten - die in, über die PCM-Anschlußeinheit PCM-AE, die LAN-Anschlußeinheit LAN-AE oder die Steuereinheit SE empfangenen Daten enthalten sind, entschieden, ob die empfangenen Daten weiterzuleiten oder zur Steuerung der Teleworking-Baugruppe T-BG bestimmt sind. Sind die Daten weiterzuleiten, werden sie protokollgerecht konvertiert und an die Zieladresse übermittelt.

Eine Übermittlung von Datenpaketen zwischen der LAN-Anschlußeinheit LAN-AE und dem Teleworking-Rechner TW-S erfolgt beispielsweise auf Basis des TCP/IP-Protokolls (Transmission Control Protokoll / Internet Protokoll). Die Übermittlung von Datenpaketen zwischen der Steuereinheit STE des Kommunikationssystems PBX und der Signalisierungseinheit SE erfolgt auf Basis des HDLC-Protokolls (High Level Data Link Control).

Für eine Anmeldung des ersten externen Endgeräts KE1 am Kommunikationssystem PBX wird durch einen Teilnehmer beispielsweise eine 'Teleworking'-Rufnummer am ersten externen Endgerät KE1 eingegeben. Daraufhin wird eine Sprachverbindung SV (in Fig. 1 gestrichelt dargestellt) zwischen dem ersten externen Endgerät KE1 und der Teleworking-Baugruppe T-BG aufgebaut.

Für eine Identifizierung des ersten externen Endgeräts KE1 am Kommunikationssystem PBX wird durch die Ausgabeeinheit S-AE der Teleworking-Baugruppe T-BG eine aufgezeichnete Sprachnachricht an das erste externe Endgerät KE1 übermittelt, die den Teilnehmer dazu auffordert, die dem ersten externen Endgerät KE1 im Kommunikationsnetz KN zugeordnete Rufnummer und eine persönliche Kennziffer PIN (Personal Identification Number) einzugeben. Diese in Form von DTMF-Signalen über die Sprachverbindung SV übermittelten Identifizierungsdaten werden von der DTMF-Erkennungseinheit DTMF bewertet und über die LAN-Anschlußeinheit LAN-AE an den Teleworking-Rechner TW-S weitergeleitet. Durch den Teleworking-Rechner TW-S wird das erste externe Endgerät KE1 z.B. durch einen Eintrag des ersten externen Endgeräts KE1 in einer - nicht dargestellte - Liste als identifiziert vermerkt, sofern dies nicht schon bei einer früheren Identifizierung erfolgt ist. Zusätzlich kann der Teilnehmer dazu aufgefordert werden ein persönliches Paßwort zu übermitteln.

Durch die in den Identifizierungsdaten übermittelte Kennziffer PIN wird anhand einer im Teleworking-Rechner TW-S gespeicherten - nicht dargestellten - Liste derjenige interne Teilnehmer-Anschlußport des Kommunikationssystems PBX ermittelt, über den sich der Teilnehmer am Kommunikationssystem anmelden möchte. Wird im Rahmen der Identifizierung beispielsweise die Kennziffer PIN A übermittelt, so erfolgt eine Anmeldung des ersten externen Endgeräts KE1 für das zweite interne Endgerät KE4 (mit der kommunikationssysteminternen Rufnummer 4711).

Wurde die dem ersten externen Endgerät KE1 im Kommunikationsnetz KN zugeordnete Rufnummer z.B. im Rahmen einer ISDN-Verbindung (im Rahmen des Leistungsmerkmals 'calling party number') automatisch vom ersten externen Endgerät KE1 an die Teleworking-Baugruppe T-BG übermittelt, wird im Teleworking-Rechner TW-S überprüft, ob das erste externe Endgerät KE1 bereits identifiziert ist, d.h. ob das erste externe Endgerät KE1 bereits in der Liste gespeichert ist. Ist das erste externe Endgerät KE1 noch nicht identifiziert, wird durch die Ausgabeeinheit S-AE der Teleworking-Baugruppe T-BG eine weitere aufgezeichnete Sprachnachricht an das erste externe Endgerät KE1 übermittelt, die den Teilnehmer dazu auffordert, die persönliche Kennziffer PIN und/oder das persönliche Paßwort einzugeben.

Die vom Teilnehmer übermittelte Kennziffer PIN kann alternativ einem fiktiven Anschlußport - das ist ein rein logisch vorhandener, also nur verwaltungstechnisch eingerichteter, keine Hardwarekomponenten aufweisender Anschlußport - des Kommunikationssystems PBX zugeordnet sein. Somit können auch Teilnehmer, denen kein physikalisch vorhandenes internes Endgerät zugeordnet ist, die Leistungsmerkmale des Kommunikationssystems am externen Endgerät nutzen.

Anhand einer im Teleworking-Rechner TW-S gespeicherten - nicht dargestellten - Liste, welche die für das 'Teleworking' berechtigten kommunikationssysteminternen Rufnummern bzw. Kennziffern PIN enthält, findet eine Überprüfung der Anmeldung des ersten externen Endgeräts KE1 statt. Hat die Überprüfung die Anmeldung bestätigt, wird dem ersten externen Endgerät KE1 vom Teleworking Rechner TW-S ein fiktiver Anschlußport - z.B. der fiktive Anschlußport FP mit der kommunikationssysteminternen Rufnummer 3200 - der Teleworking-Baugruppe T-BG zugewiesen. Gleichzeitig werden durch die Aktivierung des vom Kommunikationssystem PBX realisierten Leistungsmerkmals 'Anrufumleitung' alle an den, durch die kommunikationssysteminterne Rufnummer bzw. durch die Kennziffer PIN bezeichneten internen Teilnehmer-Anschlußport (z.B. der zweite Teilnehmeranschluß T2 der zweiten Anschlußeinheit ABG2 mit der kommunikationssysteminternen Rufnummer 4711) gerichteten Rufe an den fiktiven Anschlußport FP der Teleworking-Baugruppe T-BG umgeleitet.

Wird die Sprachverbindung SV nach dem Anmelden z.B. durch ein Auflegen des Hörers am ersten externen Endgerät KE1 unterbrochen (dies entspricht dem Normalfall), so ist eine erneute Identifizierung (Übermittlung der dem ersten externen Endgerät KE1 im Kommunikationssystem KN zugeordneten Rufnummer) des ersten externen Endgeräts KE1 am Kommunikationssystem PBX notwendig, um eine neue Verbindung zur Teleworking-Baugruppe T-BG aufzubauen.

Zusätzlich werden von der Steuereinheit STE des Kommunikationssystems PBX zum zweiten internen Endgerät KE4 (kommunikationssysteminterne Rufnummer 4711) zu übermittelnde endgeräteorientierte Signalisierungsinformationen - die Anmeldung des ersten externen Endgeräts KE1 am Kommunikationssystem PBX vorausgesetzt - an den fiktiven Anschlußport FP der Teleworking-Baugruppe T-BG umgeleitet. Die endgeräteorientierten Signalisierungsinformationen basieren auf einem Signalisierungsprotokoll Cornet-TS, wie es üblicherweise beim Signalisierungsaustausch zwischen internen Endgeräten und dem Kommunikationssystem PBX zur Verfügung steht. Die endgeräteorientierten Signalisierungsinformationen werden von der Steuereinheit STE des Kommunikationssystems PBX über die Teleworking-Baugruppe T-BG an den Teleworking-Rechner TW-S übermittelt. Hierzu werden die über die HDLC-Schnittstelle HDLCS der Signalisierungseinheit SE empfangenen endgeräteorientierten Signalisierungsinformationen in der Umwandlungseinheit MH bewertet, protokollgemäß konvertiert und über die LAN-Schnittstelle LANS der LAN-Anschlußeinheit LAN-AE an den Teleworking-Rechner TW-S weiterübermittelt.

Im Teleworking-Rechner TW-S wird eine von der Steuereinheit STE des Kommunikationssystems PBX an den fiktiven Anschlußport FP gesendete Nachricht (z.B. eine endgeräteorientierte Signalisierungsinformation) bewertet, und in Fällen, in denen diese Nachricht an das erste externe Endgerät KE1 weiterzuleiten ist, in eine, der endgeräteorientierten Signalisierungsinformation entsprechende Sprachnachricht bzw. Textnachricht (durch einen sogenannten SMS-Dienst: Short Message Service) umgesetzt. Die Sprachnachricht bzw. Textnachricht wird anschließend über eine neu aufgebaute Verbindung an das erste externe Endgerät KE1 übermittelt und an diesem z.B. über einen Lautsprecher bzw. an einem Display ausgegeben.

Wird ausgehend von einem weiteren Endgerät, beispielsweise ausgehend vom zweiten externen Endgerät KE2 oder ausgehend vom ersten internen Endgerät KE3, ein Verbindungsaufbau mit dem zweiten internen Endgerät KE4 initiiert, wird - die Anmeldung des ersten externen Endgeräts KE1 am Kommunikationssystem PBX vorausgesetzt - aufgrund der aktivierten Anrufumleitung eine erste Teilverbindung zwischen dem weiteren Endgerät und dem fiktiven Anschlußport FP der Teleworking-Baugruppe T-BG aufgebaut. In einem weiteren Schritt wird anhand der in den Identifizierungsdaten übermittelten Rufnummer des ersten externen Endgeräts KE1 im Kommunikationsnetz KN, eine zweite Teilverbindung zwischen einem weiteren fiktiven Anschlußport RP (in der Literatur häufig als 'remote port' bezeichnet) der Teleworking-Baugruppe T-BG und dem ersten externen Endgerät KE1 aufgebaut. In einem abschließenden Schritt werden die erste Teilverbindung und die zweite Teilverbindung im Baugruppenkoppelfeldmodul BG-KN der Teleworking-Baugruppe T-BG gekoppelt, wodurch eine Endgeräteverbindung zwischen dem ersten externen Endgerät KE1 und dem weiteren Endgerät zustande kommt.

Bei einem vom ersten externen Endgerät KE1 veranlaßten Verbindungsaufbau mit einem weiteren (internen oder externen) Endgerät wird durch die erneute Eingabe der 'Teleworking'-Rufnummer eine Sprachverbindung SV mit dem weiteren fiktiven Anschlußport RP der Teleworking-Baugruppe T-BG aufgebaut. Nach einem Übermitteln der Identifizierungsdaten über die Sprachverbindung SV wird durch die Ausgabeeinheit S-AE der Teleworking-Baugruppe T-BG eine aufgezeichnete Sprachnachricht an das erste externe Endgerät KE1 übermittelt, die den Teilnehmer über die möglichen Aktionen, wie z.B. Ausgabe einer im Kommunikationssystem PBX gespeicherten Sprachnachricht oder Aufbau einer Endgeräteverbindung mit einem weiteren Endgerät informiert. Durch die Eingabe einer signifikanten Tastenkombination am ersten externen Endgerät KE1 wird eine der Tastenkombination entsprechende Steuerinformation in Form von DTMF-Signalen über die Sprachverbindung SV an die Teleworking-Baugruppe T-BG übermittelt, die dem Kommunikationssystem PBX signalisiert, daß ausgehend vom fiktiven Anschlußport FP der Teleworking-Baugruppe T-BG eine Endgeräteverbindung mit einem weiteren Endgerät aufgebaut werden soll. Daraufhin wird von der Steuereinheit STE des Kommunikationssystems PBX eine Teilverbindung zwischen dem fiktiven Anschlußport FP der Teleworking-Baugruppe T-BG und dem Koppelfeldmodul KN des Kommunikationssystems PBX durch Belegen eines freien Nutzkanals des, das Koppelfeldmodul KN und die Teleworking-Baugruppe T-BG verbindenden PCM-Highways aufgebaut.

Nach einem Koppeln der Sprachverbindung SV mit der Teilverbindung im Baugruppenkoppelfeldmodul BG-KN der Teleworking-Baugruppe T-BG ertönt beim ersten externen Endgerät KE1 ein Wählton (signalisiert die Bereitschaft zur Wahlinformationseingabe). Die daraufhin am ersten externen Endgerät KE1 eingegebenen Wahlinformationen - beispielsweise 6833 für das erste interne Endgerät KE3 - werden in Form von DTMF-Tönen über die Sprachverbindung SV an die Teleworking-Baugruppe T-BG übermittelt und von dieser über den Teleworking-Rechner TW-S an die Steuereinheit STE des Kommunikationssystems PBX weitergeleitet. Von der Steuereinheit STE des Kommunikationssystems PBX wird daraufhin eine Endgeräteverbindung zwischen dem ersten externen Endgerät KE1 und dem ersten internen Endgerät KE3 eingerichtet.

Besteht am ersten externen Endgerät KE1 die Möglichkeit, die dem ersten externen Endgerät KE1 im Kommunikationsnetz KN zugeordnete Rufnummer z.B. im Rahmen einer ISDN-Verbindung (im Rahmen des Leistungsmerkmals 'calling party number') automatisch an die Teleworking-Baugruppe T-BG zu übermitteln, so kann der Teilnehmer durch Eingabe einer speziellen 'Teleworking'-Rufnummer einen Verbindungsaufbau ausgehend vom Kommunikationssystem initialisieren. Die Teleworking-Baugruppe T-BG erkennt anhand der speziellen 'Teleworking'-Rufnummer, daß vom ersten externen Endgerät KE1 eine Endgeräteverbindung zu einem weiteren Endgerät aufgebaut werden soll und nimmt den Ruf des ersten externen Endgeräts KE1 nicht an. In einem nächsten Schritt wird ausgehend vom Kommunikationssystem anhand der im Rahmen der ISDN-Verbindung automatisch übermittelten Rufnummer des ersten externen Endgeräts KE1 im Kommunikationsnetz KN eine Verbindung ausgehend vom weiteren fiktiven Anschlußport RP der Teleworking-Baugruppe T-BG zum ersten externen Endgeräts KE1 aufgebaut, so daß für den Teilnehmer am ersten externen Endgerät KE1 für die aufzubauende Endgeräteverbindung mit dem weiteren Endgerät keine Gebühren anfallen.

Die während einer zwischen dem ersten externen Endgerät KE1 und einem weiteren Endgerät bestehenden Endgeräteverbindung vom ersten externen Endgerät KE1 gesendeten Steuerinformationen werden in Form von DTMF-Signalen über die Endgeräteverbindung an die Teleworking-Baugruppe T-BG übermittelt. Die Steuerinformationen werden auf der Teleworking-Baugruppe T-BG von der DTMF-Erkennungseinheit DTMF identifiziert, in der Umwandlungseinheit MH protokollgerecht konvertiert und über die LAN-Anschlußeinheit LAN-AE an den Teleworking-Rechner TW-S weitergeleitet. Im Teleworking-Rechner TW-S werden die empfangenen Steuerdaten beispielsweise anhand einer - nicht dargestellten - Liste in endgeräteorientierte Signalisierungsinformationen, die auf einem Signalisierungsprotokoll Cornet-TS basieren, wie es üblicherweise zwischen dem Kommunikationssystem PBX und internen Endgeräten zur Verfügung steht, umgewandelt. Diese umgewandelten endgeräteorientierte Signalisierungsinformationen werden über die Teleworking-Baugruppe T-BG an die Steuereinheit STE des Kommunikationssystems PBX weitergeleitet. Können die vom ersten externen Endgerät KE1 in Form von DTMF-Signalen übermittelten Steuerinformationen von der Teleworking-Baugruppe T-BG nicht interpretiert werden, so werden die DTMF-Signale an das weitere Endgerät weitergeleitet.

Nach Beendigung der zwischen dem ersten externen Endgerät KE1 und dem weiteren Endgerät bestehenden Endgeräteverbindung wird der weitere fiktive Anschlußport RP der Teleworking-Baugruppe T-BG vom Teleworking-Rechner TW-S freigegeben und steht für einen neuen Verbindungsaufbau zur Verfügung. Der fiktive Anschlußport FP der Teleworking-Baugruppe T-BG wird erst nach einem durch den Teilnehmer veranlaßten Abmelden des ersten externen Endgeräts KE1 freigegeben. Nach dem Abmelden werden aufgrund der Deaktivierung der Anrufumleitung am Kommunikationssystem PBX, die von der Steuereinheit STE des Kommunikationssystems PBX an den Teilnehmer zu übermittelnden endgeräteorientierten Signalisierungsinformationen an den Anschlußport des dem Teilnehmer zugeordneten internen Endgeräts - beispielsweise an den Anschlußport des zweiten internen Endgeräts KE4 mit der kommunikationssysteminternen Rufnummer 4711 - übermittelt.

## Patentansprüche

1. Verfahren zum Bereitstellen von durch ein Kommunikationssystem (PBX) realisierten und an internen Teilnehmeranschlüssen verfügbaren Leistungsmerkmalen über ein Kommunikationsnetz (KN) an einem externen Endgerät (KE1),
bei dem durch Anmelden des externen Endgeräts (KE1) beim Kommunikationssystem (PBX) eine Sprachverbindung (SV) zwischen dem externen Endgerät (KE1) und einer Teleworking-Teilnehmeranschlußbaugruppe (T-BG) des Kommunikationssystems (PBX) eingerichtet wird, wobei an die Teleworking-Teilnehmeranschlußbaugruppe (T-BG) über ein lokales Rechnernetz (LAN) ein Teleworking-Rechner (TW-S) angeschlossen ist, über den die Teleworking-Teilnehmeranschlußbaugruppe (T-BG) gesteuert wird,
bei dem am externen Endgerät (KE1) eingegebene Steuerinformationen in Form von zugeordneten DTMF-Signalen über die Sprachverbindung (SV) an die Teleworking-Teilnehmeranschlußbaugruppe (T-BG) übermittelt werden, und
bei dem die auf der Teleworking-Teilnehmeranschlußbaugruppe (T-BG) empfangenen DTMF-Signale identifiziert, in endgeräteorientierte Signalisierungsinformationen, wie sie üblicherweise im Rahmen eines Signalisierungsprotokolls (Cornet-TS) zwischen internen Endgeräten (KE4) und dem Kommunikationssystem (PBX) zur Verfügung stehen, umgewandelt und über den Teleworking-Rechner (TW-S) an eine Steuereinheit (STE) des Kommunikationssystems (PBX) übermittelt werden.

2. Verfahren nach Anspruch 1,
**dadurch gekennzeichnet,**
**daß** durch den Teleworking-Rechner (TW-S) anhand von teilnehmerbezogenen Daten, die vom externen Endgerät (KE1) übermittelt werden, eine Berechtigung zum Anmelden überprüft wird.

3. Verfahren nach Anspruch 2,
**dadurch gekennzeichnet,**
**daß** im Zuge einer Anmeldung ein erster fiktiver Teilnehmer-Anschlußport (FP) der Teleworking-Teilnehmeranschlußbaugruppe (T-BG) dem externen Endgerät (KE1) vom Teleworking-Rechner (TW-S) zugewiesen wird, wobei Daten, die von der Steuereinheit (STE) an einen, durch die teilnehmerbezogenen Daten identifizierten internen Teilnehmeranschluß gerichtet sind, an den fiktiven Teilnehmer-Anschlußport (FP) umgeleitet werden.

4. Verfahren nach Anspruch 3,
**dadurch gekennzeichnet,**
**daß** Daten, die über den fiktiven Teilnehmer-Anschlußport (FP) der Teleworking-Teilnehmeranschlußbaugruppe (T-BG) an das externe Endgerät (KE1) übermittelt werden, am externen Endgerät (KE1) in Form einer Ansage und/oder einer optischen Anzeige ausgegeben werden.

5. Verfahren nach einem der vorhergehenden Ansprüche,
**dadurch gekennzeichnet,**
**daß** im Zuge eines der Anmeldung nachfolgend veranlaßten Verbindungsaufbaus zwischen dem externen Endgerät (KE1) und einem weiteren Endgerät (KE2, KE3), eine Endgeräteverbindung zwischen dem externen Endgerät (KE1) und dem weiteren Endgerät (KE2, KE3) über die Teleworking-Teilnehmeranschlußbaugruppe (T-BG) geführt wird.

6. Verfahren nach Anspruch 5,
**dadurch gekennzeichnet,**
**daß** die bei Bestehen der Endgeräteverbindung zwischen dem externen Endgerät (KE1) und dem Kommunikationssystem (PBX) vom externen Endgerät (KE1) an das Kommunikationssystem (PBX) zu übermittelnden Steuerinformationen über die Endgeräteverbindung in Form von DTMF-Signalen übermittelt werden.

7. Verfahren nach Anspruch 6,
**dadurch gekennzeichnet,**
**daß** in Fällen, in denen die DTMF-Signale auf der Teleworking-Teilnehmeranschlußbaugruppe (T-BG) nicht identifiziert werden können, die DTMF-Signale an das weitere Endgerät (KE2, KE3) weitergeleitet werden.

8. Verfahren nach Anspruch 5 bis 7,
**dadurch gekennzeichnet,**
**daß** über die Teleworking-Teilnehmeranschlußbaugruppe (T-BG) gleichzeitig mehrere Endgeräteverbindungen für jeweils zwischen einem an dem Kommunikationssystem (PBX) angemeldeten externen Endgerät und einem weiteren Endgerät geführt werden.

9. Verfahren nach einem der vorhergehenden Ansprüche,
**dadurch gekennzeichnet,**
**daß** der interne Teilnehmeranschluß lediglich im Sinne eines fiktiven Anschlußports eingerichtet ist.

10. Teleworking-Teilnehmeranschlußbaugruppe (T-BG) in einem Kommunikationssystem (PBX)zur Durchführung eines Verfahrens nach einem der Ansprüche 1 bis 9.

11. Teleworking-Teilnehmeranschlußbaugruppe nach Anspruch 10,
- mit einer, eine HDLC-Schnittstelle (HDLCS) aufweisenden Signalisierungseinheit (SE), bei der die HDLC-Schnittstelle (HDLCS) zum Anschluß an eine Steuereinheit (STE) des Kommunikationssystems (PBX) vorgesehen ist,
- mit einer, eine PCM-Schnittstelle (PCMS) aufweisenden PCM-Anschlußeinheit (PCM-AE), bei der die PCM-Schnittstelle (PCMS) zum Anschluß an einen bidirektionalen, Zeitmultiplex-orientierten Anschluß (KAk) eines Koppelfeldmoduls (KN) des Kommunikationssystems (PBX) vorgesehen ist,
und die PCM-Anschlußeinheit (PCM-AE) eine DTMF-Erkennungseinheit (DTMF) zum Erkennen und Bewerten von über eine Nutzdatenverbindung in Form von DTMF-Signalen empfangenen Steuerinformationen aufweist,
- mit einer Umwandlungseinheit (MH) zum protokollgerechten Konvertieren und Weiterleiten von zwischen der Signalisierungseinheit (SE) und der PCM-Anschlußeinheit (PCM-AE) zu übermittelnden Daten.

12. Anordnung nach Anspruch 10 oder 11,
**dadurch gekennzeichnet,**
**daß** die Teleworking-Teilnehmeranschlußbaugruppe (T-BG) eine LAN-Anschlußeinheit (LAN-AE) mit einer LAN-Schnittstelle (LANS) aufweist, wobei die LAN-Schnittstelle (LANS) zum Anschluß an ein lokales Rechnernetz (LAN) vorgesehen ist.

13. Anordnung nach einem der Ansprüche 10 bis 12,
**dadurch gekennzeichnet,**
**daß** die Teleworking-Teilnehmeranschlußbaugruppe (T-BG) eine Ausgabeeinheit (S-AE) zur Übermittlung von auf der Teleworking-Teilnehmeranschlußbaugruppe (T-BG) gespeicherter Nachrichten aufweist, wobei die Nachrichten in Form einer Ansage und/oder einer optischen Anzeige an einem Endgerät (KE1) ausgegeben werden.

## Claims

1. Method for providing service features implemented by a communication system (PBX) and available on internal subscriber lines over a communication network (KN) on an external terminal device (KE1),
wherein through logging on of the external terminal device (KE1) on to the communication system (PBX), a voice connection (SV) is established between the external terminal device (KE1) and a teleworking subscriber line module (T-BG) of the communication system PBX, a teleworking computer (TW-S) being connected via a local computer network (LAN) to the teleworking subscriber line module (T-BG), via which teleworking computer (TW-S) the teleworking subscriber line module (T-BG) is controlled,
wherein control information input at the external terminal device (KE1) is transmitted in the form of assigned DTMF signals via the voice connection (SV) to the teleworking subscriber line module (T-BG), and
wherein the DTMF signals received on the teleworking subscriber line module (T-BG) are identified, converted into terminal-device-oriented signalling information such as is normally available under a signalling protocol (Cornet-TS) between internal terminal devices (KE4) and the communication system (PBX), and transmitted via the teleworking computer (TW-S) to a control unit (STE) of the communication system (PBX).

2. Method according to Claim 1,
**characterised in that**
an authorisation for logging on is checked by the teleworking computer (TW-S) using subscriber-specific data which is transmitted from the external terminal device (KE1).

3. Method according to Claim 2,
**characterised in that**
in the course of a logon a first fictitious subscriber terminal port (FP) of the teleworking subscriber line module (T-BG) is assigned to the external terminal device (KE1) by the teleworking computer (TW-S), whereby data which is sent from the control unit (STE) to an internal subscriber line identified by the subscriber-specific data is rerouted to the fictitious subscriber terminal port (FP).

4. Method according to Claim 3,
**characterised in that**
data which is transmitted via the fictitious subscriber terminal port (FP) of the teleworking subscriber line module (T-BG) to the external terminal device (KE1) is output on the external terminal device (KE1) in the form of a voice announcement and/or an optical display.

5. Method according to any one of the preceding claims,
**characterised in that**
in the course of the establishment of a connection, initiated subsequent to logging on, between the external terminal device (KE1) and a further terminal device (KE2, KE3), a terminal-to-terminal connection is routed between the external terminal device (KE1) and the other terminal device (KE2, KE3) via the teleworking subscriber line module (T-BG).

6. Method according to Claim 5,
**characterised in that**
the control information to be transmitted from the external terminal device (KE1) to the communication system (PBX) in the event of a terminal-to-terminal connection existing between the external terminal device (KE1) and the communication system (PBX) is transmitted via the terminal-to-terminal connection in the form of DTMF signals.

7. Method according to Claim 6,
**characterised in that**
in cases in which the DTMF signals cannot be identified on the teleworking subscriber line module (T-BG), the DTMF signals are forwarded to the other terminal device (KE2, KE3).

8. Method according to Claim 5 to Claim 7,
**characterised in that**
a plurality of terminal-to-terminal connections for [lacuna] respectively between an external terminal device logged on to the communication system (PBX) and a further terminal device are routed simultaneously via the teleworking subscriber line module (T-BG).

9. Method according to any one of the preceding claims,
**characterised in that**
the internal subscriber line is set up only for the purposes of a fictitious terminal port.

10. Teleworking subscriber line module (T-BG) in a communication system (PBX) for implementing a method according to any one of Claims 1 to 9.

11. Teleworking subscriber line module according to Claim 10,
- comprising a signalling unit (SE) having an HDLC interface (HDLCS), whereby the HDLC interface (HDLCS) is provided for connecting to a control unit (STE) of the communication system (PBX),
- comprising a PCM connection unit (PCM-AE) having a PCM interface (PCMS), whereby the PCM interface (PCMS) is provided for connecting to a bidirectional, time-division-multiplex-oriented terminal (KAk) of a switching unit module (KN) of the communication system (PBX),
and the PCM connection unit (PCM-AE) has a DTMF detection unit (DTMF) for detecting and evaluating control information received via a user-data connection in the form of DTMF signals,
- comprising a conversion unit (MH) for the protocol conversion and forwarding of data for transmission between the signalling unit (SE) and the PCM connection unit (PCM-AE).

12. Arrangement according to Claim 10 or Claim 11,
**characterised in that**
the teleworking subscriber line module (T-BG) has a LAN connection unit (LAN-AE) with a LAN interface (LANS), whereby the LAN interface (LANS) is provided for connecting to a local computer network (LAN).

13. Arrangement according to any one of Claims 10 to 12,
**characterised in that**
the teleworking subscriber line module (T-BG) has an output unit (S-AE) for transmitting messages stored on the teleworking subscriber line module (T-BG), whereby the messages are output in the form of a spoken announcement and/or an optical display on a terminal device (KE1).

## Revendications

1. Procédé pour la mise à disposition de services réalisés par un système de communication (PBX) et disponibles sur des raccordements d'abonnés internes via un réseau de communication (KN) sur un terminal (KE1) externe,
dans lequel, par l'entrée en communication du terminal (KE1) externe auprès du système de communication (PBX), une liaison vocale (SV) est mise en place entre le terminal (KE1) externe et un ensemble de raccordement d'abonnés de télétravail (T-BG) du système de communication (PBX), un ordinateur de télétravail (TW-S), par lequel l'ensemble de raccordement d'abonnés de télétravail (T-BG) est commandé, étant raccordé à l'ensemble de raccordement d'abonnés de télétravail (T-BG) via un réseau d'ordinateurs local (LAN),
dans lequel des informations de commande entrées sur le terminal (KE1) externe sont transmises sous la forme de signaux DTMF attribués via la liaison vocale (SV) à l'ensemble de raccordement d'abonnés de télétravail (T-BG), et
dans lequel les signaux DTMF reçus sur l'ensemble de raccordement d'abonnés de télétravail (T-BG) sont identifiés, convertis en informations de signalisation orientées terminaux, comme celles mises à disposition habituellement dans le cadre d'un protocole de signalisation (Cornet-TS) entre des terminaux (KE4) internes et le système de communication (PBX), et sont transmis par l'ordinateur de télétravail (TW-S) à une unité de commande (STE) du système de communication (PBX).

2. Procédé selon la revendication 1,
**caractérisé en ce que**
une autorisation d'entrée en communication est contrôlée par l'ordinateur de télétravail (TW-S) à l'aide de données spécifiques à l'abonné, qui sont transmises par le terminal (KE1) externe.

3. Procédé selon la revendication 2,
**caractérisé en ce que**,
dans le cadre d'une entrée en communication, un premier port de raccordement d'abonné (FP) fictif de l'ensemble de raccordement d'abonnés de télétravail (T-BG) est attribué au terminal (KE1) externe de l'ordinateur de télétravail (TW-S), des données, qui sont orientées par l'unité de commande (STE) à un raccordement d'abonné interne identifié par les données spécifiques à l'abonné, étant déviées sur le port de raccordement d'abonné (FP) fictif.

4. Procédé selon la revendication 3,
**caractérisé en ce que**
des données, qui sont transmises via le port de raccordement d'abonné (FP) fictif de l'ensemble de raccordement d'abonnés de télétravail (T-BG) au terminal (KE1) externe, sont sorties sur le terminal (KE1) externe sous la forme d'une annonce et/ou d'un affichage optique.

5. Procédé selon l'une quelconque des revendications précédentes,
**caractérisé en ce que**
dans le cadre d'un établissement de liaison accordé à la suite de la demande entre le terminal (KE1) externe et un autre terminal (KE2, KE3), une liaison de terminaux entre le terminal (KE1) externe et l'autre terminal (KE2, KE3) est guidée par l'ensemble de raccordement d'abonnés de télétravail (T-BG).

6. Procédé selon la revendication 5,
**caractérisé en ce que**
les informations de commande à transmettre du terminal (KE1) externe au système de communication (PBX) en cas d'existence de la liaison de terminaux entre le terminal (KE1) externe et le système de communication (PBX) sont transmises via la liaison de terminaux sous la forme de signaux DTMF.

7. Procédé selon la revendication 6,
**caractérisé en ce que**
dans les cas où les signaux DTMF ne peuvent pas être identifiés sur l'ensemble de raccordement d'abonnés de télétravail (T-BG), les signaux DTMF sont transmis à l'autre terminal (KE2, KE3).

8. Procédé selon les revendications 5 à 7,
**caractérisé en ce que**
plusieurs liaisons de terminaux entre à chaque fois un terminal externe demandé sur le système de communication (PBX) et un autre terminal sont guidées simultanément par l'ensemble de raccordement d'abonnés de télétravail (T-BG).

9. Procédé selon l'une quelconque des revendications précédentes,
**caractérisé en ce que**
le raccordement d'abonné interne est aménagé uniquement dans le sens d'un port de raccordement fictif.

10. Ensemble de raccordement d'abonnés de télétravail (T-BG) dans un système de télécommunication (PBX) pour la mise en oeuvre d'un procédé selon l'une quelconque des revendications 1 à 9.

11. Ensemble de raccordement d'abonnés de télétravail selon la revendication 10,
- avec une unité de signalisation (SE) présentant une interface de HDLC (HDLCS) dans laquelle l'interface de HDLC (HDLCS) est prévue pour le raccordement à une unité de commande (STE) du système de communication (PBX),
- avec une unité de raccordement de PCM (PCM-AE) présentant une interface de PCM (PCMS), dans laquelle l'interface de PCM (PCMS) est prévue pour le raccordement à un branchement (KAk) bidirectionnel, orienté multiplexage temporel, d'un module de champ de couplage (KN) du système de communication (PBX), et l'unité de raccordement de PCM (PCM-AE) présente une unité de reconnaissance de DTMF (DTMF) pour la reconnaissance et l'évaluation d'informations de commande reçues par une liaison de données utiles sous la forme de signaux DTMF,
- avec une unité de conversion (MH) pour la conversion conforme au protocole et la transmission de données à transmettre entre l'unité de signalisation (SE) et l'unité de raccordement de PCM (PCM-AE).

12. Dispositif selon la revendication 10 ou 11,
**caractérisé en ce que**
l'ensemble de raccordement d'abonnés de télétravail (T-BG) présente une unité de raccordement de LAN (LAN-AE) avec une interface de LAN (LANS), l'interface de LAN (LANS) étant prévue pour le raccordement à un réseau d'ordinateurs local (LAN).

13. Dispositif selon l'une quelconque des revendications 10 à 12,
**caractérisé en ce que**
l'ensemble de raccordement d'abonnés de télétravail (T-BG) présente une unité de sortie (S-AE) pour la transmission de messages stockés sur l'ensemble de raccordement d'abonnés de télétravail (T-BG), les messages étant sortis sous la forme d'une annonce et/ou d'un affichage optique sur un terminal (KE1).
